# EUROPEAN PATENT SPECIFICATION

(11) **EP 3 000 316 B1**
(45) Date of publication and mention of the grant of the patent: **05.12.2018**
(21) Application number: 15186042.6
(22) Date of filing: 21.09.2015
(51) Int. Cl.: A01K 1/01

(54) **MANURE REMOVING APPARATUS FOR A FREESTALL CATTLE BARN**
VORRICHTUNG ZUR BESEITIGUNG VON TIERDUNG FÜR EINEN VIEHLAUFSTALL
APPAREIL D'ÉLIMINATION DE FUMIER BOVIN POUR UNE ÉTABLE À STABULATION LIBRE

(30) Priority: 23.09.2014 FI 20145835
(43) Date of publication of application: 30.03.2016
(73) Proprietor: Pellon Group Oy, 62375 Ylihärmä (FI)
(72) Inventor: Ikola, Kaappo, 62375 Ylihärmä (FI); Ylimäki, Juha, 62375 Ylihärmä (FI)
(74) Representative: LEITZINGER OY

(56) References cited:
- GB-A- 2 355 639
- US-A- 5 641 058

## Description

The invention relates to a manure removing apparatus for a freestall cattle barn, comprising a manure alley, a scraper to be pulled along the manure alley, which gathers manure in front of itself for conveying the manure into a removing channel, a traction cable attached to the scraper, a traction mechanism for pulling the traction cable and the scraper, a friction wheel which is driven by the traction mechanism and over which the traction cable extends, a control device for controlling operation of the traction mechanism, as well as means for measuring the pulling force of the traction cable.

A problem in this type of manure removing equipment, wherein a traction cable is operated with a friction wheel, is a slacking of the traction cable caused by the traction cable stretching. This results in a need of tensioning the traction cable from time to time to avoid slipping of the pulley. Tensioning can be easily conducted as a manual operation, but then the problem is the assessment of required tensioning. If timely tensioning is overlooked, the result can be a highly arduous cleaning operation of the overloaded manure alley.

GB 2355639 shows a manure removing apparatus with a drive unit to wind rope on and off whereby scrapers attached to the rope are pulled up and down a floor of an animal housing. The drive unit can pull the rope in either direction. The rope is pretensioned about an extendable pivot member which is provided by springs for automatic rope tensioning. The pivot member is in the frame of the drive unit.

An object of the invention is to overcome the aforesaid problem and to provide a manure removing apparatus that enables automatic tensioning of the traction cable whenever necessary.

This object is attained on the basis of the characterizing features as presented in the appended claim 1. Preferred embodiments of the invention are presented in the dependent claims.

The invention will now described more closely with reference to the accompanying drawings, in which
**fig. 1** shows a manure removing apparatus of the invention in a perspective view obliquely from above;
**fig. 2** shows, in a delineated perspective view obliquely from above, one exemplary embodiment for a traction cable tensioning unit of the manure removing apparatus in a normal condition;
**fig. 3** shows the tensioning unit of fig. 2 in a traction cable tensioning condition;
**fig. 4** shows the tensioning unit of figs. 2 and 3 in a delineated perspective view obliquely from above and from the other side; and
**fig. 5** shows the tensioning unit of figs. 2-4 in a perspective view obliquely from above with a frame 28 partially cut away (as also in figs. 2-4).

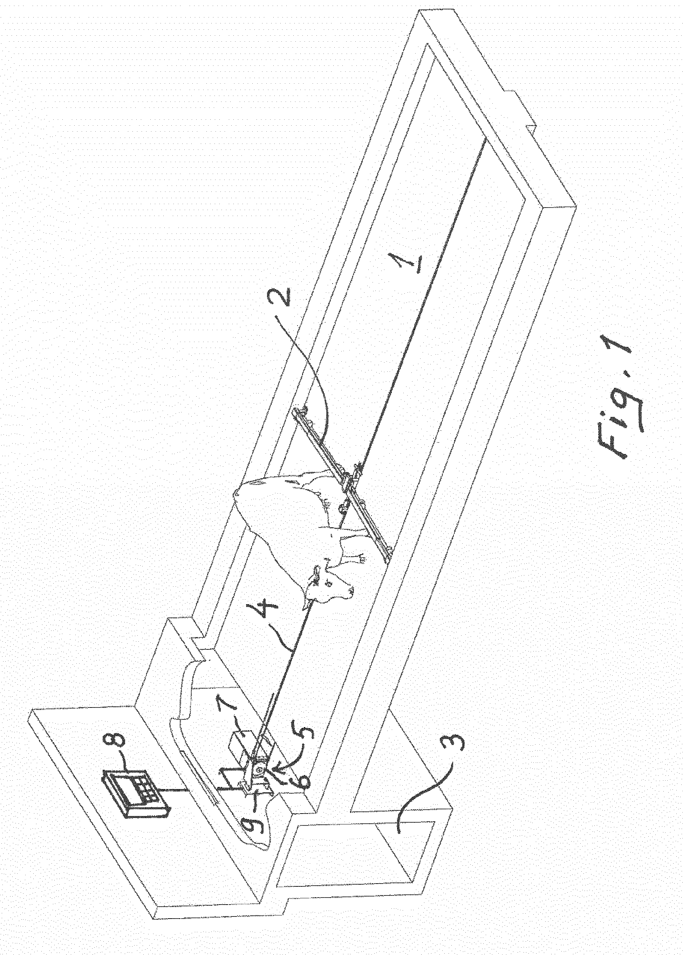

In reference to fig. 1, there is first described the manure removing apparatus as a whole. The manure removing apparatus includes a scraper 2 to be pulled along a manure alley 1, which gathers manure in front of itself for conveying the manure into a removing channel 3. To the scraper 2 is attached a traction cable 4, which has its upper run in the manure alley 1 along its entire length and its lower run in a urine draining channel present underneath the manure alley 1.The traction cable 4 extends over a friction wheel 6 included in a traction mechanism 5. The friction wheel 6 is driven by a motor 7 with its gearing. The manure alley 1 has at its upstream end (outer end) a freely rotating idler wheel around which extends the traction cable 4. In manure removing operation, the cable 4 and the scraper 2 are pulled by the traction mechanism 5 from the outer end of the manure alley 1 towards the removing channel 3. This pulling motion occurs at such a slow rate that the movement of the scraper 2 does not disturb healthy animals who step over the scraper 2 while moving about. Likewise, the scraper performs its return motion slowly enough from the standpoint of safety.

A control device 8 is provided on a wall of the freestall cattle barn and it is used for controlling operation of the traction mechanism 5. The control device 8 includes a display and keyboard, as well as control electronics which may include a program-controlled processor along with its memory.

The traction mechanism 5 is fastened to an end wall or some other backing structure with a load sensor 9, said load sensor measuring continuously the pulling force of the scraper 2 throughout the entire pulling cycle. The load sensor 9 supplies the control device 8 with measurement data about the pulling force across the entire traveling distance of the scraper 2.

The control device 8 is adapted to respond to a change of rate in the pulling force. Normally, the pulling force increases at a relatively consistent rate and sudden changes in the pulling force are quite modest. On this basis, the control device has been provided with a set threshold value for the rate of change in the pulling force. In this context, the rate of change refers to a change timed over a period with the duration (e.g. less than 1 second) suitable from the standpoint of operation. In other words, the threshold value for a rate of change is exceeded if the pulling force increases more than anticipated within a given period of time. If, for example, a passage of the scraper is blocked by the foot of a cow, the scraper may stop and the pulling force increases abruptly. Once the threshold value is exceeded, the pull of the scraper is halted and an alarm is given. The scraper can also be moved slightly backward, followed by another attempt to proceed. If the threshold value is exceeded again, it is only then that the pull of the scraper is stopped and an alarm given. The threshold value can be determined and set experimentally. The threshold value for a rate of change in the pulling force is more or less independent of the absolute pulling force value, thus obtaining a high responsiveness without false alarms. This embodiment is easy to implement.

In first use, the apparatus can be subjected to trial runs during which the apparatus is set up with safe threshold values for a rate of change in the pulling force. As a result, the apparatus is capable of safely and positively removing manure loads generated in working conditions existing at any time.

A discovery in the present invention is the use of the load sensor 9 for another purpose, namely to provide measurement data for activating automatic traction cable tensioning when the pulling force measuring result transmitted by the load sensor 9 to the control device 8 in the rest condition falls short of a predetermined threshold value. Therefore, at least one end of the traction cable 4 is attached to the scraper 2 through the intermediary of an automatic traction cable tensioning unit 10.

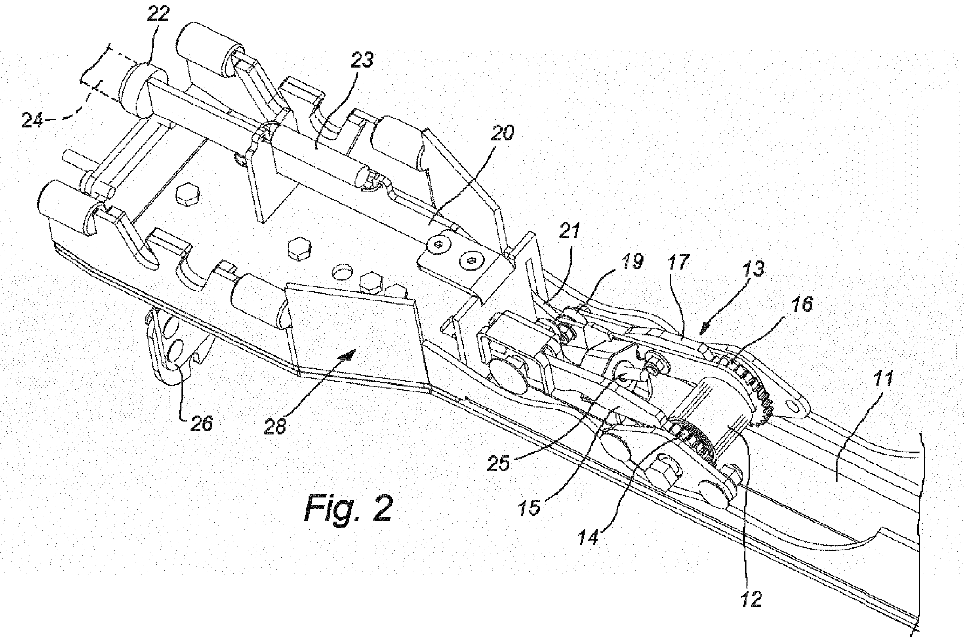

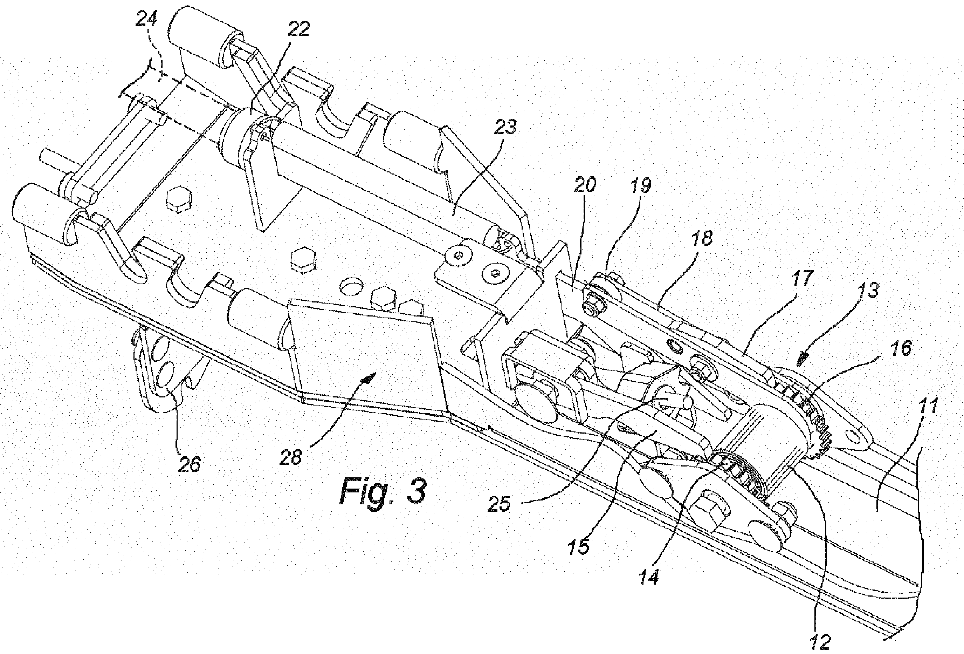

In reference to figs. 2-5, there is next described one embodiment for a traction cable tensioning unit 10 of the invention. The tensioning unit 10 comprises a winding shaft 12, which is used for one end of the traction cable 4 or for a tensioning belt 11 present as an extension thereof, and which incorporates a two-member ratchet mechanism 13. The first ratchet member 14, 15 is a holding ratchet, which prevents rotation of the winding shaft in a cable slacking direction. The second ratchet member 16-19 is a tensioning ratchet, which is part of a drive mechanism 16-22 by which the winding shaft 12 is rotatable in a cable tensioning direction. The tensioning ratchet 16-19 comprises a toothed ratchet wheel 16 and a pawl 17 engaging the same and connected to a pivot lever 18 whose end carries a roller 19 that rests against a tapered surface 21 included in a thrust bar 20. For the purpose of tensioning the traction cable 4, the thrust bar 20 can be shifted by using a solid pushrod 24 to press against a pushing head 22 while the scraper 2 and the tensioning unit 10 are moving towards the pushrod 24. The pushrod 24 can be in engagement with a grate (not shown) present on top of the removing channel 3. A shift of the thrust bar 20 from the position of fig. 2 to the position of fig. 3 enables the roller 19 running along the tapered surface 21 to rise and to turn the pivot lever 18 and the ratchet pawl 17 carried therewith, the latter rotating the ratchet wheel 16 (and the winding shaft 12) a bit more than over a tooth. The holding ratchet 14, 15 keeps the winding shaft 12 in the new position. The thrust bar 20 and the tensioning ratchet 16-19 are returned by a spring 23 to the initial position. Accordingly, the thrust bar 20 is movable back and forth by means of the pushrod 24 and the return spring 23 as the tensioning unit 10, which is attached to the scraper 2, is operated along with the scraper respectively back and forth.

The control device 8 has its data processor provided with a program, under whose control the control device is adapted, on the basis of measurement results provided by the load sensor 9, to automatically activate the tensioning unit 10. The measurement is conducted while the traction mechanism 5 is in a rest condition while the scraper is stationary. In the discussed exemplary embodiment, the measurement is conducted as the scraper has stopped at a so-called "homespot" present alongside the removing channel 3. If the pulling force measurement result transmitted by the load sensor 9 to the control device now falls short of a predetermined threshold value, the traction mechanism 5 is adapted to move the scraper a small distance past the "homespot", whereby the solid pushrod 24 pushes, through the intermediary of the pushing head 22, the thrust bar 20 as well as its tapered surface 21, thereby enabling the tensioning ratchet 16-19 and the ratchet mechanism 13 to perform a tensioning action as described above.

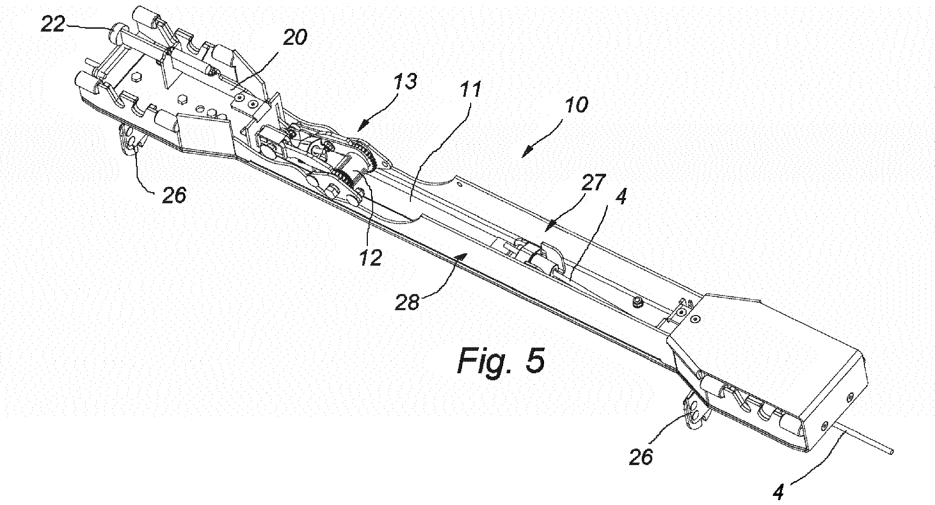

The traction cable 4 has its pulling end 25, by which the scraper 2 is pulled in a manure removing direction, attached fixedly to a frame 28 of the tensioning unit 10, which is attached fixedly to the scraper 2 with mounting brackets 26. Alternatively, the pulling end 25 can be fixedly attached directly to the scraper. When the scraper is pulled towards the "homespot" from a fixed pulling point, the tensioning occurs from a slack side of the traction cable 4. During the course of an extra pulling motion of the scraper, the traction cable 4 can have light tensioning on the side that is pull-free or slack during tensioning. Visible in fig. 5 is the attachment of a slack end of the traction cable 4 to a carriage 27 that has the tensioning belt 11 associated therewith.

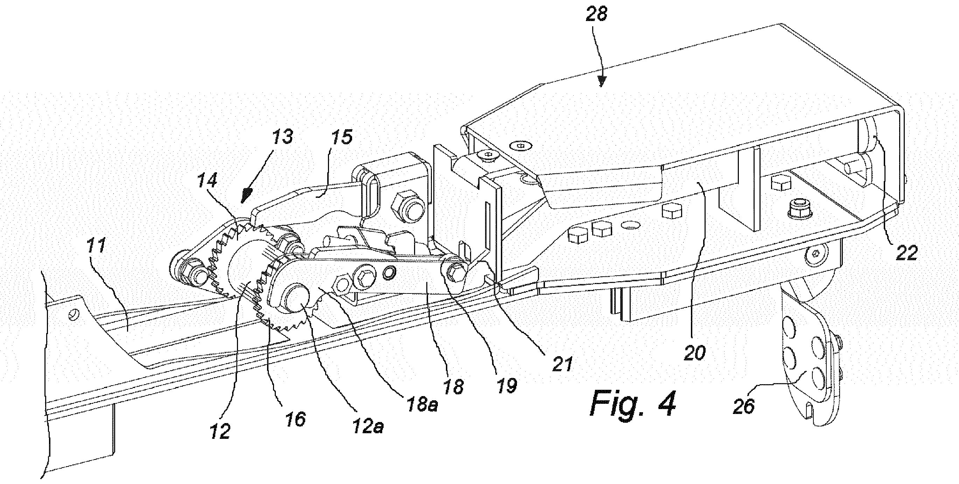

Visible in fig. 4 is an end 12a of the winding shaft 12, which is gripped by a slot at an end 18a of the lever 18 and which makes up a pivot axle for the lever 18. The lever 18 remains stationary by means of its own weight.

There is an alternative possibility that the measurement of a tensioning necessity and the tensioning of a traction cable be conducted at an upstream end of the manure alley 1, in which case the end to be tensioned and the fixed end of the traction cable swop places in order to apply the tensioning to the traction cable's end which during the tensioning pull is pull-free. Hence, the tensioning pull is directed towards the upstream end of the manure alley and the fixed pushrod 24 located there. It is obvious that a skilled artisan is capable of designing a multitude of various tensioning mechanisms which respond to a pulling motion of the scraper for rotating the winding shaft 12.

## Claims

1. A manure removing apparatus for a freestall cattle barn, comprising a manure alley (1), a scraper (2) to be pulled along the manure alley, which gathers manure in front of itself for conveying the manure into a removing channel (3), a traction cable (4) attached to the scraper, a traction mechanism (5) for pulling the traction cable (4) and the scraper (2), a friction wheel (6) which is driven by the traction mechanism and over which the traction cable extends, a control device (8) for controlling operation of the traction mechanism (5), as well as means (9) for measuring the pulling force of the traction cable (4), **characterized in that** the pulling force is adapted to be measured with a load sensor (9) which supplies the control device (8) with information about the pulling force, that at least one end of the traction cable (4) is attached to the scraper (2) through the intermediary of an automatic traction cable tensioning unit (10), and that the tensioning unit (10) is adapted to conduct automatically the tensioning of the traction cable (4) once the pulling force measuring result, transmitted by the load sensor (9) to the control device, falls short of a predetermined threshold value with the traction mechanism (5) in a rest condition.

2. A manure removing apparatus according to claim 1, **characterized in that** the traction mechanism (5) is mounted on a wall or other backing structure by way of the load sensor (9), whereby the load sensor is adapted to measure the pulling force while the scraper (2) is stationary in the proximity of the removing channel (3).

3. A manure removing apparatus according to claim 1 or 2, **characterized in that** the control device (8) has its data processor provided with a program, under whose control the control device is adapted, on the basis of measurement results provided by the load sensor (9), to automatically activate the tensioning unit (10).

4. A manure removing apparatus according to claim 1, 2 or 3, **characterized in that**, when falling short of the threshold value, the traction mechanism (5) is adapted to displace the scraper (2) over a small distance, whereby a solid pushrod (4) applies a push to a drive mechanism (16-22) included in the tensioning unit.

5. A manure removing apparatus according to any of claims 1-4, **characterized in that** the tensioning unit (10) comprises a winding shaft (12), which is used for one end of the traction cable (4) or for a belt (11) present as an extension thereof, and which incorporates a two-member ratchet mechanism (13), whose first ratchet member (14, 15) is a holding ratchet preventing rotation of the winding shaft in a cable slacking direction, and whose second ratchet member (16-19) is a tensioning ratchet making up a part of said drive mechanism (16-22) by which the winding shaft (12) is rotatable in a traction cable tensioning direction.

6. A manure removing apparatus according to any of claims 1-5, **characterized in that** a particular end (25) of the traction cable (4), by which the scraper (2) is pulled in a manure removing direction, is attached fixedly to the scraper (2) or to the tensioning unit's (10) frame which is attached fixedly to the scraper (2)

7. A manure removing apparatus according to any of claims 1-6, **characterized in that** the tensioning ratchet (16-19) comprises a toothed ratchet wheel (16) and a pawl (17) engaging the same and connected to a pivot lever (18) whose end carries a roller (19) that rests against a tapered surface (21) included in a thrust bar (20) that is movable back and forth by means of a pushrod (24) and a return spring (23).

8. A manure removing apparatus according to any of claims 1-7, **characterized in that** the traction cable (4), which is attached by its opposite ends to the scraper (2), has its upper run located in the manure alley and its lower run in a urine channel underneath the manure alley, that the traction cable (4) extends over the friction wheel (6) of the traction mechanism (5), and that one end of the manure alley is provided with a freely rotating idler wheel over which the traction cable (4) extends.

## Patentansprüche

1. Dungbeseitigungsvorrichtung für einen Viehlaufstall, umfassend eine Dunggasse (1), einen die Dunggasse entlang zu ziehenden Räumer (2), der Dung vor sich selbst einsammelt, um den Dung in einen Abführkanal (3) zu befördern, ein Zugseil (4), das an dem Räumer befestigt ist, einen Zugmechanismus (5) zum Ziehen des Zugseils (4) und des Räumers (2), ein Reibrad (6) das durch den Zugmechanismus angetrieben wird und über das sich das Zugseil erstreckt, eine Steuerungsvorrichtung (8) zum Steuern des Betriebs des Zugmechanismus (5), sowie Mittel (9) zum Messen der Zugkraft des Zugseils (4), **dadurch gekennzeichnet, dass** die Zugkraft ausgebildet ist, mit einem Lastsensor (9) gemessen zu werden, der die Steuerungsvorrichtung (8) mit Informationen über die Zugkraft versorgt, dass mindestens ein Ende des Zugseils (4) am Räumer (2) mittels einer automatischen Zugseilspanneinheit (10) befestigt ist, und dass die Spanneinheit (10) ausgebildet ist, das Spannen des Zugseils (4) automatisch durchzuführen, wenn das Messergebnis, das durch den Lastsensor (9) an die Steuerungsvorrichtung übertragen wurde, einen vorgegebenen Schwellenwert mit dem Zugmechanismus (5) in einem Ruhezustand unterschreitet.

2. Dungbeseitigungsvorrichtung nach Anspruch 1, **dadurch gekennzeichnet, dass** der Zugmechanismus (5) an einer Wand oder einer anderen Tragstruktur über den Lastsensor (9) angebracht ist, wobei der Lastsensor dazu ausgebildet ist, die Zugkraft zu messen, während der Räumer (2) in der Nähe des Abführkanals (3) stationär ist.

3. Dungbeseitigungsvorrichtung nach Anspruch 1 oder 2, **dadurch gekennzeichnet, dass** die Steuerungsvorrichtung (8) seinen Datenprozessor mit einem Programm versorgt, unter dessen Kontrolle die Steuerungsvorrichtung ausgebildet ist, auf der Grundlage von den vom Lastsensor (9) bereitgestellten Messergebnissen, die Spanneinheit (10) automatisch zu aktivieren.

4. Dungbeseitigungsvorrichtung nach Anspruch 1, 2 oder 3, **dadurch gekennzeichnet, dass** bei Unterschreiten des Schwellenwerts, der Zugmechanismus (5) ausgebildet ist, den Räumer (2) über eine kleine Distanz zu verschieben, wodurch ein fester Stößel (4) einen Schub auf den Antriebsmechanismus (16-22), der in der Spanneinheit enthalten ist, ausübt.

5. Dungbeseitigungsvorrichtung nach einem der Ansprüche 1-4, **dadurch gekennzeichnet, dass** die Spanneinheit (10) eine Wickelwelle (12) umfasst, die für ein Ende des Zugseils (4) oder für einen vorhandenen Riemen (11) als Erweiterung desselben verwendet wird, und die einen zweiteiligen Ratschenmechanismus (13) beinhaltet, dessen erstes Ratschenelement (14, 15) eine Halteratsche ist, die die Drehung der Wickelwelle in Richtung der durchhängenden Kabel verhindert, und dessen zweites Ratschenelement (16-19) eine Spannratsche ist, die einen Teil des Antriebsmechanismus (16-22) ausmacht, mit dem die Wickelwelle (12) in Richtung der Zugseilspannung drehbar ist.

6. Dungbeseitigungsvorrichtung nach einem der Ansprüche 1-5, **dadurch gekennzeichnet, dass** ein bestimmtes Ende (25) des Zugseils (4), wodurch der Räumer (2) in eine Richtung der Dungbeseitigung gezogen wird, an dem Räumer (2) oder dem Rahmen der Spanneinheit (10) befestigt ist, der fest an dem Räumer (2) befestigt ist.

7. Dungbeseitigungsvorrichtung nach einem der Ansprüche 1-6, **dadurch gekennzeichnet, dass** die Spannratsche (16-19) ein Ratschenrad (16) und eine damit in Eingriff stehende Sperrklinke (17) umfasst, und mit einem Schwenkhebel (18) verbunden ist, dessen Ende eine Rolle (19) trägt, die gegen eine abgeschrägt Fläche (21) anliegt, die in einer Schubstange (20) enthalten ist, die durch einen Stößel (24) und eine Rückstellfeder (23) hin und her beweglich ist.

8. Dungbeseitigungsvorrichtung nach einem der Ansprüche 1-7, **dadurch gekennzeichnet, dass** das Zugseil (4), das an seinen gegenüberliegenden Enden am Räumer (2) befestigt ist, seinen oberen Lauf in der Dunggasse und seinen unteren Lauf in einem Urinkanal unterhalb der Dunggasse aufweist, dass sich das Zugseil (4) über das Reibrad (6) des Zugmechanismus (5) erstreckt, und dass ein Ende der Dunggasse mit einem frei drehenden Umlenkrad versehen ist, über welches sich das Zugseil (4) erstreckt.

## Revendications

1. Dispositif d'élimination de fumier pour une étable à stabulation libre, comprenant un couloir à fumier (1), un racloir (2) à tirer le long du couloir à fumier, lequel collecte du fumier devant lui-même pour transporter le fumier vers un canal d'élimination (3), un câble de traction (4) fixé au racloir, un mécanisme de traction (5) permettant de tirer le câble de traction (4) et le racloir (2), une roue à friction (6) entraînée par le mécanisme de traction et sur laquelle s'étend le câble de traction, un dispositif de commande (8) pour commander le fonctionnement du mécanisme de traction (5), ainsi qu'un moyen (9) pour mesurer la force de traction du câble de traction (4), **caractérisé en ce que** la force de traction est adaptée pour être mesurée avec un capteur de charge (9) fournissant des informations concernant la force de traction au dispositif de commande (8), **en ce qu'**au moins une extrémité du câble de traction (4) est fixée au racloir (2) par l'intermédiaire d'une unité de tension de câble de traction automatique (10), et **en ce que** l'unité de tension (10) est adaptée pour mettre le câble de traction (4) automatiquement sous tension lorsque le résultat de mesure de la force de traction, transmis par le capteur de charge (9) au dispositif de commande, est inférieur à une valeur seuil prédéterminée avec le mécanisme de traction (5) dans un état de repos.

2. Dispositif d'élimination de fumier selon la revendication 1, **caractérisé en ce que** le mécanisme de traction (5) est monté sur un mur ou une autre structure de support à l'aide du capteur de charge (9), moyennant quoi le capteur de charge est adapté pour mesurer la force de traction tandis que le racloir (2) est stationnaire à proximité du canal d'élimination (3).

3. Dispositif d'élimination de fumier selon la revendication 1 ou 2, **caractérisé en ce que** le dispositif de commande (8) présente un processeur de données doté d'un programme sous la commande duquel le dispositif de commande est adapté pour activer automatiquement l'unité de tension (10) sur la base de résultats de mesure fournis par le capteur de charge (9) .

4. Dispositif d'élimination de fumier selon la revendication 1, 2 ou 3, **caractérisé en ce qu'**en cas de résultat inférieur à la valeur seuil, le mécanisme de traction (5) est adapté pour déplacer le racloir (2) sur une courte distance, moyennant quoi une tige poussoir solide (4) applique une poussée à un mécanisme d'entraînement (16-22) compris dans l'unité de tension.

5. Dispositif d'élimination de fumier selon l'une quelconque des revendications 1 à 4, **caractérisé en ce que** l'unité de tension (10) comprend un arbre d'enroulement (12), lequel est utilisé pour une extrémité du câble de traction (4) ou pour une courroie (11) prévue comme une extension de celui-ci, et lequel incorpore un mécanisme à rochet à deux éléments (13), dont le premier élément de rochet (14, 15) est un rochet de retenue empêchant la rotation de l'arbre d'enroulement dans une direction de relâchement de câble, et dont le deuxième élément de rochet (16-19) est un rochet de tension constituant une partie dudit mécanisme d'entraînement (16-22) au moyen duquel l'arbre d'enroulement (12) est mis en rotation dans une direction de tension de câble de traction.

6. Dispositif d'élimination de fumier selon l'une quelconque des revendications 1 à 5, **caractérisé en ce qu'**une extrémité particulière (25) du câble de traction (4), au moyen de laquelle le racloir (2) est tiré dans une direction d'élimination de fumier, est attaché fixement au racloir (2) ou au cadre de l'unité de tension (10), lequel est attaché fixement au racloir (2).

7. Dispositif d'élimination de fumier selon l'une quelconque des revendications 1 à 6, **caractérisé en ce que** le rochet de tension (16-19) comprend une roue à rochet (16) et un cliquet (17) engageant celle-ci tout en étant relié à un levier pivotant (18) dont l'extrémité porte un rouleau (19) appuyé contre une surface inclinée (21) comprise dans une barre de poussée (20) déplaçable vers l'arrière et vers l'avant à l'aide d'une tige poussoir (24) et d'un ressort de rappel (23).

8. Dispositif d'élimination de fumier selon l'une quelconque des revendications 1 à 7, **caractérisé en ce que** le câble de traction (4), lequel est fixé au racloir (2) par ses extrémités opposées, présente une partie supérieure située dans le couloir à fumier et une partie inférieure située dans un canal à urine en dessous du couloir à fumier, **en ce que** le câble de traction (4) s'étend sur la roue à friction (6) du mécanisme de traction (5), et **en ce qu'**une extrémité du couloir à fumier est pourvue d'une roue libre tournant librement sur laquelle s'étend le câble de traction (4).
